# EUROPEAN PATENT APPLICATION

(11) **EP 1 265 239 A1**
(43) Date of publication of application: **11.12.2002**
(21) Application number: 01980914.4
(22) Date of filing: 26.10.2001
(51) Int. Cl.: G11B 20/10, G11B 19/04, B60R 11/02

(54) **MOBILE ELECTRONIC APPARATUS AND METHOD FOR CONTROLLING READ/WRITE RATE OF DATA**

(30) Priority: 10.11.2000 JP 2000344077
(71) Applicant: Sony Corporation, Tokyo 141-0001 (JP)
(72) Inventor: SASAKI, Takumi, c/o Sony Corporation, Tokyo 141-0001 (JP)
(74) Representative: Melzer, Wolfgang, Dipl.-Ing.
(86) International application number: JP0109418
(87) International publication number: WO02039448

(57) **Abstract**

In a mobile electronic device (11), at least either one of the read rate from a first recording medium (12) and the write rate in a second recording medium (13) is variable. A detection means (14) detects a force acting on the mobile unit, and a control means (14) controls at least either the variable read or write rate on the basis of the detection. Even while the moving unit moves, data in the first recording medium (12) can be stably saved in the second recording medium (13), improving the reliability. Data in the first recording medium (12) can be saved in the second recording medium (13) within the shortest time corresponding to the moving state of the mobile unit, improving the convenience.

## Description

### Technical Field

The present invention relates to a mobile electronic device for saving data of a first recording medium in a second recording medium, and a data read/write rate control method therefor.

### Background Art

Some of mobile audio apparatuses such as an onboard audio apparatus can save audio signals of a recording medium in another recording medium. Such an onboard audio apparatus can successively play back musical compositions from a recording medium which saves only desired musical compositions, or can do away with carrying of a recording medium which records audio signals into a vehicle next time.

While a vehicle travels, a force generally acts on the vehicle due to vibrations caused by a rough road surface or the acceleration/deceleration of the vehicle. A force acting on the vehicle also acts on the onboard audio apparatus. As a result, the position of a head for reading out an audio signal from a source recording medium or the position of a head for writing an audio signal in a destination recording medium is relatively displaced from a normal position with respect to the recording medium, generating a read/write error.

There is a demand for saving an audio signal within a short time by saving it at a rate higher than a normal audio signal playback rate. However, high-rate saving is readily influenced by a force acting on the vehicle, and the read/write error rate further increases. It is difficult for the conventional onboard audio apparatus to stably save an audio signal from a source recording medium to a destination recording medium while the vehicle travels, resulting in low reliability.

It is an object of the present invention to provide a mobile electronic device which is reliable for being capable of stably saving data of a first recording medium in a second recording medium even during movement of a mobile unit and which is convenient for saving data of the first recording medium in the second recording medium within the shortest time corresponding to the moving state of the mobile unit, and a data read/write rate control method therefor.

### Disclosure of Invention

In a first mobile electronic device according to the present invention, at least either one of the read rate of data from a first recording medium by read means and the write rate of data in a second recording medium by write means is variable. Detection means detects a force acting on a mobile unit, and control means controls at least either the variable read or write rate on the basis of the detection.

If the force acting on the mobile unit has a predetermined value or more, the error rate can be suppressed in at least either read or write by decreasing at least either the read or write rate. Even during movement of the mobile unit, data in the first recording medium can be stably saved in the second recording medium, therefore the device is reliable.

If the force acting on the mobile unit has the predetermined value or less, at least either the read or write rate can be increased unless the error rate becomes excessively high. Data in the first recording medium can be saved in the second recording medium within the shortest time corresponding to the moving state of the mobile unit, therefore the device is convenient.

In a preferred first mobile electronic device according to the present invention, display means displays a prospective end time of data write in the second recording medium. The driver or passenger of the mobile unit can easily know the prospective end time, therefore the device is highly convenient.

In another preferred first mobile electronic device according to the present invention, the control means controls at least either data read from the first recording medium or data write in the second recording medium on the basis of the prospective end time of data write in the second recording medium and the prospective moving time of the mobile unit.

If the prospective end time is shorter than the prospective moving time, at least either one of the read rate of data from the first recording medium and the write rate of data in the second recording medium can be decreased within the range of the prospective moving time. Even while the mobile unit moves, data in the first recording medium can be further stably saved in the second recording medium, therefore the device is highly reliable.

If the prospective end time is longer than the prospective moving time, data read from the first recording medium and data write in the second recording medium can be stopped. This can prevent a case in which save of data is not ended yet at the end of movement of the mobile unit, therefore the device is highly convenient.

In still another preferred first mobile electronic device according to the present invention, vibrations acting on the mobile unit are detected. If this vibration has a predetermined value or more, the error rate can be suppressed in at least either read or write by decreasing at least either the read or write rate. Even during movement of the mobile unit, data in the first recording medium can be stably saved in the second recording medium, therefore the device is reliable.

If the vibration acting on the mobile unit has the predetermined value or less, at least either the read or write rate can be increased unless the error rate becomes excessively high. Data in the first recording medium can be saved in the second recording medium within the shortest time corresponding to the moving state of the mobile unit, therefore the device is convenient.

In a second mobile electronic device according to the present invention, at least either one of the read rate of data from a first recording medium by read means and the write rate of data in a second recording medium by write means is variable. Detection means detects an error rate in at least either read or write, and control means controls either the variable read or write rate on the basis of the detection.

If the error rate in at least either read or write has a predetermined value or more, the error rate can be suppressed by decreasing at least either the read or write rate. Even during movement of the mobile unit, data in the first recording medium can be stably saved in the second recording medium, therefore the device is reliable.

If the error rate has the predetermined value or less, at least either the read or write rate can be increased unless the error rate becomes excessively high. Data in the first recording medium can be saved in the second recording medium within the shortest time corresponding to the moving state of the mobile unit, therefore the device is convenient.

In a preferred second mobile electronic device according to the present invention, display means displays a prospective end time of data write in the second recording medium. The driver or passenger of the mobile unit can easily know the prospective end time, therefore the device is highly convenient.

In another preferred second mobile electronic device according to the present invention, the control means controls at least either data read from the first recording medium or data write in the second recording medium on the basis of the prospective end time of data write in the second recording medium and the prospective moving time of the mobile unit.

If the prospective end time is shorter than the prospective moving time, at least either one of the read rate of data from the first recording medium and the write rate of data in the second recording medium can be decreased within the range of the prospective moving time. Even while the mobile unit moves, data in the first recording medium can be further stably saved in the second recording medium, therefore the device is highly reliable.

If the prospective end time is longer than the prospective moving time, data read from the first recording medium and data write in the second recording medium can be stopped. This can prevent a case in which save of data is not ended yet at the end of movement of the mobile unit, therefore the device is highly convenient.

In a third mobile electronic device according to the present invention, at least either one of the read rate of data from a first recording medium by read means and the write rate of data in a second recording medium by write means is variable. Detection means detects a force acting on a mobile unit and an error rate in at least either read or write, and control means controls either the variable read or write rate on the basis of the detection.

If the force acting on the mobile unit has a predetermined value or more, or the error rate in at least either read or write has a predetermined value or more, the error rate can be suppressed by decreasing at least either the read or write rate. Even during movement of the mobile unit, data in the first recording medium can be stably saved in the second recording medium, therefore the device is reliable.

If the force acting on the mobile unit has the predetermined value or less, and the error rate has the predetermined value or less, at least either the read or write rate can be increased unless the error rate becomes excessively high. Data in the first recording medium can be saved in the second recording medium within the shortest time corresponding to the moving state of the mobile unit, therefore the device is convenient.

In a preferred third mobile electronic device according to the present invention, display means displays a prospective end time of data write in the second recording medium. The driver or passenger of the mobile unit can easily know the prospective end time, therefore the device is highly convenient.

In another preferred third mobile electronic device according to the present invention, the control means controls at least either data read from the first recording medium or data write in the second recording medium on the basis of the prospective end time of data write in the second recording medium and the prospective moving time of the mobile unit.

If the prospective end time is shorter than the prospective moving time, at least either one of the read rate of data from the first recording medium and the write rate of data in the second recording medium can be decreased within the range of the prospective moving time. Even while the mobile unit moves, data in the first recording medium can be further stably saved in the second recording medium, therefore the device is highly reliable.

If the prospective end time is longer than the prospective moving time, data read from the first recording medium and data write in the second recording medium can be stopped. This can prevent a case in which save of data is not ended yet at the end of movement of the mobile unit, therefore the device is highly convenient.

In still another preferred third mobile electronic device according to the present invention, vibrations acting on the mobile unit are detected. If this vibration has a predetermined value or more, the error rate can be suppressed in at least either read or write by decreasing at least either the read or write rate. Data in the first recording medium can be saved in the second recording medium within the shortest time corresponding to the moving state of the moving unit, therefore the device is convenient.

If the vibration acting on the mobile unit has the predetermined value or less, at least either the read or write rate can be increased unless the error rate becomes excessively high. Data in the first recording medium can be saved in the second recording medium within the shortest time corresponding to the moving state of the mobile unit, therefore the device is convenient.

In a data read/write rate control method for a mobile electronic device according to the present invention, at least either one of the read rate of data from a first recording medium and the write rate of data in a second recording medium is variable. A force acting on a mobile unit and an error rate in at least either read or write are detected, and either the variable read or write rate is controlled on the basis of the detection.

If the force acting on the mobile unit has a predetermined value or more, or the error rate in at least either read or write has a predetermined value or more, the error rate can be suppressed by decreasing at least either the read or write rate. Even during movement of the mobile unit, data in the first recording medium can be stably saved in the second recording medium, therefore the method is reliable.

If the force acting on the mobile unit has the predetermined value or less, and the error rate has the predetermined value or less, at least either the read or write rate can be increased unless the error rate becomes excessively high. Data in the first recording medium can be saved in the second recording medium within the shortest time corresponding to the moving state of the mobile unit, therefore the method is convenient.

In a preferred data read/write rate control method for the mobile electronic device according to the present invention, a prospective end time of data write in the second recording medium is displayed. The driver or passenger of the mobile unit can easily know the prospective end time, therefore the method is highly convenient.

In another preferred data read/write rate control method for the mobile electronic device according to the present invention, at least either data read from the first recording medium or data write in the second recording medium is controlled on the basis of the prospective end time of data write in the second recording medium and the prospective moving time of the mobile unit.

If the prospective end time is shorter than the prospective moving time, at least either one of the read rate of data from the first recording medium and the write rate of data in the second recording medium can be decreased within the range of the prospective moving time. Even while the mobile unit moves, data in the first recording medium can be further stably saved in the second recording medium, therefore the method is highly reliable.

If the prospective end time is longer than the prospective moving time, data read from the first recording medium and data write in the second recording medium can be stopped. This can prevent a case in which save of data is not ended yet at the end of movement of the mobile unit, therefore the method is highly convenient.

In still another preferred data read/write rate control method for the mobile electronic device according to the present invention, vibrations acting on the mobile unit are detected. If this vibration has a predetermined value or more, the error rate can be suppressed in at least either read or write by decreasing at least either the read or write rate. Data in the first recording medium can be saved in the second recording medium within the shortest time corresponding to the moving state of the mobile unit, therefore the method is convenient.

If the vibration acting on the mobile unit has the predetermined value or less, at least either the read or write rate can be increased unless the error rate becomes excessively high. Data in the first recording medium can be saved in the second recording medium within the shortest time corresponding to the moving state of the mobile unit, therefore the method is convenient.

### Brief Description of Drawings

Fig. 1 is a block diagram showing an onboard audio apparatus according to a mode of the present invention; and
Fig. 2 is a flow chart showing the flow of saving an audio signal in the onboard audio apparatus shown in Fig. 1.

### Best Mode of Carrying Out the Invention

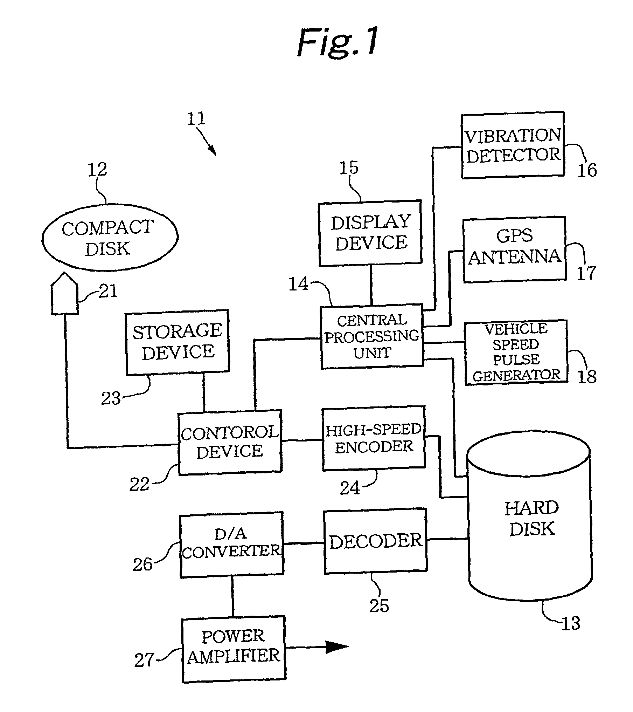

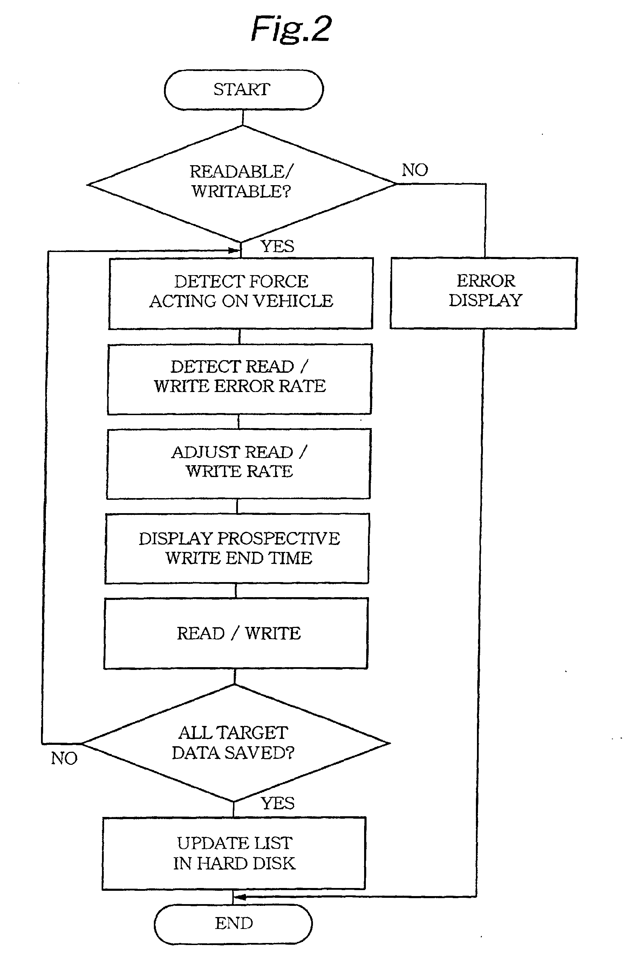

A mode of the present invention which is applied to an onboard audio apparatus and data read/write rate control method therefor will be described with reference to Figs. 1 and 2. In an onboard audio apparatus 11 of this mode, an audio signal in a compact disk 12 is saved in a hard disk 13, and audio is played back from the hard disk 13. A read section for the compact disk 12 can store, e.g., 100 compact disks 12. The hard disk 13 may be of internal type in which the hard disk 13 is incorporated in the onboard audio apparatus 11, or of external type in which the hard disk 13 is connected to the onboard audio apparatus 11. The hard disk 13 has a recording capacity of, e.g., 64 Gbytes.

If a button for saving an audio signal of the compact disk 12 in the hard disk 13 is operated during traveling of a vehicle, a central processing unit 14 checks whether read of audio signals from the compact disk 12 and write of the audio signals in the hard disk 13 are possible. In other words, the central processing unit 14 checks whether the compact disk 12 is set in the read section for the compact disk 12 and whether the hard disk 13 has a free recording capacity. If the compact disk 12 is not set in the read section or the hard disk 13 does not have any free recording capacity, the central processing unit 14 displays a message to this effect on a display device 15, and does not save any audio signal.

If read of audio signals from the compact disk 12 and write of the audio signals in the hard disk 13 are both possible, the central processing unit 14 detects a force acting on the vehicle. More specifically, the central processing unit 14 differentiates vibration signals output from a vibration detector 16 with respect to time, differentiates position signals output from a GPS antenna 17 to calculate second-order derivatives with respect to time, or differentiates vehicle speed signals output from a vehicle speed pulse generator 18 with respect to time. In this manner, the central processing unit 14 detects a force acting on the vehicle.

Audio signals in the compact disk 12 are read out via an optical head 21. The read rate is variable and controlled by a control device 22 to, e.g., 20 times the normal playback rate at maximum. The audio signals read out from the compact disk 12 are temporarily stored in a storage device 23. The audio signals read out from the storage device 23 are compressed by a high-speed encoder 24 which adopts ATRAC3 or MP3 as an audio compression method. The compressed signals are written in the hard disk 13. The write rate of audio signals in the hard disk 13 is high and variable.

The central processing unit 14 detects error rates in read from the compact disk 12 and write in the hard disk 13, and adjusts the read and write rates on the basis of the above-described force and error rates. If the above-described force has a predetermined value or more or the above-described error rate has a predetermined value or more, the central processing unit 14 sends an instruction of decreasing the read rate to the control device 22, and also decreases the write rate. If the above-described force or error rate is larger than the predetermined value, the central processing unit 14 may not execute read from the compact disk 12 and write in the hard disk 13.

After the read and write rates are determined, the prospective write end time is also determined. The central processing unit 14 displays this prospective end time on the display device 15. Then, audio signals are read out from the compact disk 12 at the adjusted read rate, and written in the hard disk 13 at the adjusted write rate. This save is performed every predetermined length of audio signals or predetermined length of time. Every time save of this unit ends, whether all target audio signals are saved is checked.

If an audio signal to be saved remains in the compact disk 12, the central processing unit 14 detects a force acting on the vehicle again, and also repeats the subsequent processing. If the detected force acting on the vehicle or the error rates in read from the compact disk 12 and write in the hard disk 13 vary from the previously detected force or error rates, the read and write rates are adjusted again.

That is, if at least either one of the above-described force and error rate is higher than the previous one, the central processing unit 14 sends an instruction of decreasing the read rate to be lower than the previous one, and also decrease the write rate. If both the above-described force and error rate are lower than the previous ones, the central processing unit 14 sends an instruction of increasing the read rate to be higher than the previous one, and also increases the write rate.

After the read and write rates are adjusted, the prospective end time of write in the hard disk 13 also varies from the previous one. The central processing unit 14 displays the varied prospective end time on the display device 15. If all target audio signals are saved, a list, i.e., directory in the hard disk 13 is updated, and the save ends.

To play back audio signals from the hard disk 13 which stores audio signals, audio signals read out from the hard disk 13 are decompressed by a decoder 25 which employs the same audio compression method as that of the high-speed encoder 24. The decompressed signals are converted from digital signals into analog signals by a D/A converter 26, power-amplified by a power amplifier 27, and supplied to a loudspeaker (not shown).

In the onboard audio apparatus 11 and data read/write rate control method therefor described above, the read rate from the compact disk 12 and the write rate in the hard disk 13 are both variable. Alternatively, only one of the read and write rates may be variable, and only the variable read or write rate may be controlled.

In the onboard audio apparatus 11 and data read/write rate control method therefor described above, the read and write rates are controlled based on both the force acting on the vehicle and the error rates of read from the compact disk 12 and write in the hard disk 13. Alternatively, the read and write rates may be controlled on the basis of only one of the force and error rates.

Since the above onboard audio apparatus 11 comprises the GPS antenna 17, the central processing unit 14 can predict the prospective vehicle traveling time in route navigation. If the prospective write end time is shorter than the prospective vehicle traveling time, the read rate from the compact disk 12 and the write rate in the hard disk 13 can be decreased within the range of the prospective traveling time. If the prospective end time is longer than the prospective traveling time, read from the compact disk 12 and write in the hard disk 13 can be stopped.

In the onboard audio apparatus 11 and data read/write rate control method therefor described above, audio signals in the compact disk 12 are saved in the hard disk 13. Alternatively, audio signals in a recording medium other than the compact disk 12 may be saved in a high-speed writable, large-capacity recording medium other than the hard disk 13. Data such as video signals or other digital signals except audio signals may be saved.

In the onboard audio apparatus 11 and data read/write rate control method therefor described above, processing of saving audio signals of the compact disk 12 in the hard disk 13 starts upon operating a button or the like. Alternatively, save processing may automatically start when the compact disk 12 is set in the read section for the compact disk 12. The onboard audio apparatus 11 comprises the decoder 25 serving as a means for playing back audio signals. Alternatively, the onboard audio apparatus 11 may comprise only a means for saving data without any means for playing back data.

In the above mode, the present invention is applied to the onboard audio apparatus 11 as a kind of onboard electronic device used in a vehicle and the data read/write rate control method therefor. The present invention can also be applied to a mobile electronic device used in a variety of mobile units such as a shipboard and aircraft and a data read/write rate control method therefor.

### Industrial Applicability

The present invention can be utilized for a mobile electronic device such as an onboard audio apparatus used in a mobile unit such as a vehicle, shipboard, or aircraft, and a data read/write rate control method therefor.

## Claims

1. A mobile electronic device for saving data of a first recording medium in a second recording medium, wherein
at least one of a read rate of read means for reading out the data from the first recording medium and a write rate of write means for writing the data read out by the read means in the second recording medium is variable,
detection means detects a force acting on a mobile unit, and
control means controls at least either the variable read or write rate on the basis of the detection.

2. A mobile electronic device according to claim 1, wherein
prediction means predicts a prospective end time of the write, and
display means displays the prospective end time.

3. A mobile electronic device according to claim 1, wherein
first prediction means predicts a prospective end time of the write,
second prediction means predicts a prospective moving time of the mobile unit, and
the control means controls at least either one of the read and the write on the basis of the prospective end time and the prospective moving time.

4. A mobile electronic device according to claim 1, wherein the force includes a vibration.

5. A mobile electronic device for saving data of a first recording medium in a second recording medium, wherein
at least one of a read rate of read means for reading out the data from the first recording medium and a write rate of write means for writing the data read out by the read means in the second recording medium is variable,
detection means detects an error rate in either one of the read and the write, and
the control means controls at least either the variable read or write rate on the basis of the detection.

6. A mobile electronic device according to claim 5, wherein
prediction means predicts a prospective end time of the write, and
display means displays the prospective end time.

7. A mobile electronic device according to claim 5, wherein
first prediction means predicts a prospective end time of the write,
second prediction means predicts a prospective moving time of the mobile unit, and
the control means controls at least either one of the read and the write on the basis of the prospective end time and the prospective moving time.

8. A mobile electronic device for saving data of a first recording medium in a second recording medium, wherein
at least one of a read rate of read means for reading out the data from the first recording medium and a write rate of write means for writing the data read out by the read means in the second recording medium is variable,
detection means detects a force acting on a mobile unit and an error rate in either one of the read and the write, and
control means controls at least either the variable read or write rate on the basis of the detection.

9. A mobile electronic device according to claim 8, wherein
prediction means predicts a prospective end time of the write, and
display means displays the prospective end time.

10. A mobile electronic device according to claim 8, wherein
first prediction means predicts a prospective end time of the write,
second prediction means predicts a prospective moving time of the mobile unit, and
the control means controls at least either one of the read and the write on the basis of the prospective end time and the prospective moving time.

11. A mobile electronic device according to claim 8, wherein the force includes a vibration.

12. A data read/write rate control method for a mobile electronic device for saving data of a first recording medium in a second recording medium, wherein
at least one of a read rate for reading out the data from the first recording medium and a write rate for writing the readout data in the second recording medium is variable, and
the method comprises
the first detection step of detecting a force acting on a mobile unit,
the second detection step of detecting an error rate in either one of the read and the write, and
the control step of controlling at least either the variable read or write rate on the basis of the first or second detection.

13. A data read/write rate control method for a mobile electronic device according to claim 12, further comprising
the prediction step of predicting a prospective end time of the write, and
the display step of displaying the prospective end time.

14. A data read/write rate control method for a mobile electronic device according to claim 12, wherein the method further comprises
the first prediction step of predicting a prospective end time of the write, and
the second prediction step of predicting a prospective moving time of the mobile unit, and
at least either one of the read and the write is controlled in the control step on the basis of the prospective end time and the prospective moving time.

15. A data read/write rate control method for a mobile electronic device according to claim 12, wherein the force includes a vibration.
